# EUROPEAN PATENT APPLICATION

(11) **EP 4 527 982 A2**
(43) Date of publication of application: **26.03.2025**
(21) Application number: 24201373.8
(22) Date of filing: 19.09.2024
(51) Int. Cl.: C23F 13/04, G01N 17/02

(54) **CATHODIC PROTECTION MEASUREMENT SYSTEM AND METHOD INCLUDING A VARIABLE INPUT IMPEDANCE**

(30) Priority: 19.09.2023 US 202318370328
(71) Applicant: Borin Manufacturing, Inc., Culver City, CA 90230 (US)
(72) Inventor: Borin, Frank William, Culver City, CA 90230 (US); Theissen, Thomas, Culver City, CA 90230 (US)
(74) Representative: Meissner Bolte Nürnberg

(57) **Abstract**

A system for measuring the voltage potential across test coupons, reference cells and metal structures is disclosed. The system may evaluate the amount of cathodic protection that may be applied to the metal structure. The system may be controlled remotely and may implement a variable input impedance assembly to troubleshoot out of bounds measurement results.

## Description

### Copyright Statement

This patent document contains material subject to copyright protection. The copyright owner has no objection to the reproduction of this patent document or any related materials in the files of the United States Patent and Trademark Office, but otherwise reserves all copyrights whatsoever.

### Field of the Invention

This invention relates to cathodic protection of metal structures, including a cathodic protection measurement and test system including a variable input impedance.

### Background

Cathodic protection (CP) of large metal structures such as pipelines, storage tanks, drilling rigs and other types of metal structures is a technique used to control and reduce the corrosion of the metal surfaces of the structures. During the process, the metal surface to be protected may be forced to be the cathode of an electrochemical cell. In this way, there may be a flow of current into the metal to be protected (the cathode) from an anode which may counteract corrosion.

In order to ensure that a particular metal structure (*e.g*., a pipeline) is adequately protected by CP, measurements may be made, and the results may be compared to established criteria.

A first method of this includes placing (*e.g*., burying) a reference electrode in close proximity to the structure being protected, and measuring the potential between reference electrode (*e.g*., a copper sulfate reference electrode or CSE) and the structure. A second method includes the positioning of test coupons in close vicinity of the structure in addition to the reference electrode, wherein the coupons may comprise the same material as the structure being protected. The procedure may then involve making voltage potential measurements between the coupons and the reference electrode.

In either case, wires may extend from the reference electrode, the test coupons, and the structure to the surface where the wires may be accessible for electrical measurements. In this way, the voltage measurements may be taken, and the cathodic protection may be assessed.

During the CP measurement process, any measurements that seem to be less than or greater than expected values may be manually troubleshooted onsite using a variety of techniques. However, with some CP measurement systems that are controlled remotely, *e.g*., the CP measurement system described in US Patent Application Serial No. 17/035,503, filed September 28, 2020, the entire contents of which are hereby fully incorporated herein by reference for all purposes, no technician may be available onsite to troubleshoot the problem(s).

Accordingly, there is a need for an automated test system that may, upon detecting potentially out of bounds measurement results, troubleshoot itself automatically, and without manual intervention.

### Summary of the invention

The invention is set forth in the independent claims.

A system for measuring voltage potential comprises a first electrical test lead in electrical communication with a cathodic protection reference electrode; a second electrical test lead in electrical communication with a cathodic protection test coupon or with a structure under cathodic protection; an electrical measurement system including a test port including a test port first input impedance and adapted to measure at least one electrical parameter between the first electrical test lead and the second electrical test lead; at least one first electrical impedance member configurable with the test port; and a controller adapted to cause the configuring of the at least one first electrical impedance member with the test port to transform the test port first input impedance to a test port second input impedance.

A method of measuring cathodic protection comprises the following steps: (A) electrically configuring a first electrical test lead with a cathodic protection reference electrode; (B) electrically configuring a second electrical test lead with a cathodic protection test coupon or with a structure under cathodic protection; (C) electrically configuring a test port of an electrical measurement system with the first electrical test lead and with the second electrical test lead to measure an electrical parameter, the test port including a first input impedance; (D) providing a first electrical impedance member configurable with the test port; (E) controlling, using a controller, the configuring of the first electrical impedance member with the test port to transform the test port first input impedance to a test port second input impedance.

Embodiments of the system and method result from the dependent claims and the following exemplary embodiments.

### Brief Description of the Drawings

Various other objects, features and attendant advantages of the present invention will become fully appreciated as the same becomes better understood when considered in conjunction with the accompanying drawings, in which like reference characters designate the same or similar parts throughout the several views, and wherein:
**FIGS. 1-3** show aspects of a measurement system according to exemplary embodiments hereof;
**FIG. 4** shows aspects of a connection assembly according to exemplary embodiments hereof;
**FIG. 5** show aspects of a measurement system including a variable input impedance assembly according to exemplary embodiments hereof; and
**FIG. 6** shows aspects of a computing system according to exemplary embodiments hereof.

### Detailed Description of Exemplary Embodiments

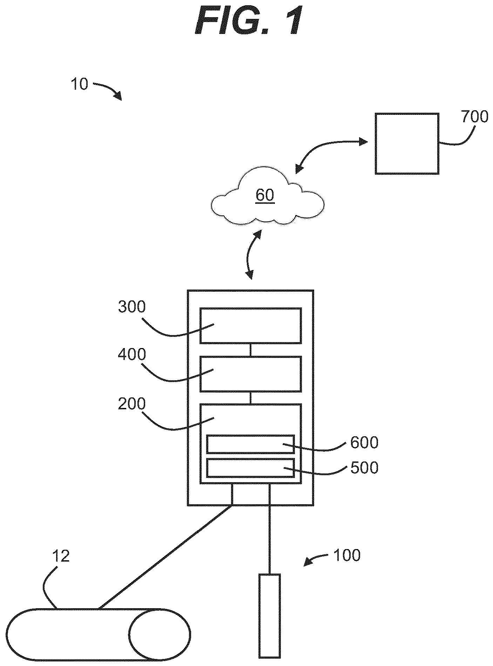

In some embodiments, as shown in **FIG. 1****,** the cathodic protection (CP) measurement system **10** (also referred to herein as simply the system **10**) includes a test probe assembly **100,** a measurement and test system **200,** a communication system **300,** a controller **400,** a connection assembly **500,** and a reference electrode verification system **600.** In some embodiments, the system **10** also may include a backend platform **700** (*e.g*., a cloud platform) that it may communicate with via the communication system **300.** The system **10** also may include other systems, components, and/or elements as necessary for the system **10** to fulfill its functionalities.

In general, the cathodic protection (CP) measurement system **10** according to exemplary embodiments hereof provides equipment, devices, components, methods, and procedures for monitoring, measuring, evaluating, and computing the amount, level, and criteria of cathodic protection of a structure **12** or combination of structures **12.** The CP measurement system **10** also includes a controllable input impedance thereby enabling a user to monitor, quantify, and troubleshoot the general health, installation and environment of a reference electrode being used by the system **10.**

Note that **FIG. 1** is a block diagram meant for demonstrational purposes and is not meant to represent the actual sizes, shapes, proportions, orientations, or locations of the various systems or assemblies.

### Cathodic Protection - Overview

Cathodic protection (CP) is a technique used to control and reduce the corrosion of metal surfaces. As is known in the art, corrosion may occur as a metal loses electrons to its surroundings. The corrosion process occurs with the removal of electrons (oxidation) of the metal and the consumption of those electrons by some other reduction reaction, such as oxygen reduction. To counteract the loss of electrons, the metal surface to be protected may be forced to be the cathode of an electrochemical cell. In this way, there may be a flow of current into the metal to be protected (the cathode) from an anode. It may be preferable that the level of current flowing into the metal structure overcome the naturally occurring loss of electrons from the metal structure so that corrosion may be controlled at a reduced level. CP may be used to protect large metal structures such as pipelines, storage tanks, drilling rigs and other types of metal structures.

One method of CP involves connecting the metal to be protected to a more easily corroded metal to act as the anode (*e.g*., a galvanic anode). The more easily corroded metal (the galvanic anode) may then corrode instead of the protected metal. For this reason, the anode metal may often be referred to as a sacrificial anode.

A second method of CP involves impressing a direct current between an inert anode and the metal structure to be protected. This method may be preferred for larger structures, or where electrolyte resistivity is high, and where galvanic anodes may not deliver enough current to provide protection. The direct current may be applied to the system by a transformer rectifier or by other sources of direct current. The anode may be buried in proximity to the metal structure and a low voltage DC may be impressed between the anode and the cathode (the metal structure to be protected) such that the desired amount of current my flow into the metal structure thereby offsetting the loss of electrons due to natural corrosion processes.

### Criteria and Measurement of Cathodic Protection

In order to ensure that a particular metal structure (*e.g*., a pipeline) is adequately protected by CP, measurements may be made, and the results may be compared to established criteria.

There are several measurement methodologies that may be employed to ensure adequate CP.

A first method includes placing (*e.g*., burying) a reference electrode in close proximity to the structure being protected, and measuring the potential between reference electrode (*e.g*., a copper sulfate reference electrode or CSE) and the structure. Once the potential measurements are taken, the data is compared to established criteria. In order to assess any IR (voltage) drop that may exist in the soil or across the structure's coating that may produce an error in the pipe-to-soil (p/s) potential measurement, this measurement scheme may require the interruption of the CP current and the measurement of an off-potential immediately following interruption. This IR-drop may be affected by soil resistivity, depth of burial, the soil conditions around the reference electrode, coating condition of the structure, the amount of CP current, and other variables. In addition, the resulting error may vary from pipeline to pipeline and even along the length of a given pipe.

A second methodology to test for adequate CP includes placing (*e.g*., burying) a reference electrode as well as test coupons in close vicinity of the structure, where the coupons comprise the same material as the structure being protected. The procedure involves making voltage potential measurements between the coupons and the reference electrode. It may be preferable that the coupons comprise the same material as the structure but with no coating. In this way, the coupons may represent a section of the structure where the coating may be damaged, may include a defect or may not have been applied (coating holiday). The test coupons may be electrically connected to the metal structure being protected so that the coupons and the structure may be at the same potential, and therefore may receive the same amount of CP. The voltage measurement between the test coupons and the reference electrode may then represent the cathodic protection present on the metal structure being protected.

### System 10

The system **10** is apable of providing any of the CP measurement methodologies described above to ensure adequate CP. Also, it is understood that other CP test methodologies also may exist and that the system **10** is capable of providing those additional methodologies as well. In addition, as will be described in other sections, the system **10** also includes reference electrode verification system **600** thereby providing the ability to monitor, quantify, and troubleshoot the installation, environment, and general health of a reference electrode **102** being used by the system **10** during such measurement methodologies.

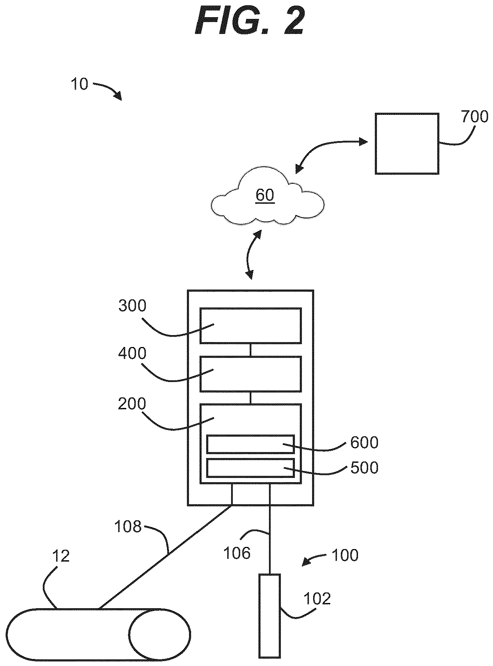

In some embodiments, as shown in **FIG. 1****,** the system **10** is configured to characterize the CP protection of a structure **12** (*e.g*., an underground pipeline) by placing (*e.g*., burying) a test probe assembly **100** in close proximity to the structure **12.** **FIG. 2** shows a general arrangement that may represent both the first and/or second CP test methodologies described above. In some embodiments, the test probe assembly **100** is electrically connected to an electrical line **106** (*e.g*., one or more wires or other types of transmission lines) that extends to above ground, *e.g*., through a protective conduit. In addition, the surface of the structure **12** being protected (*e.g*., the pipeline) also is electrically connected to an electrical line **108** (*e.g.*, one or more wires or other types of transmission lines) that also extends to above ground, *e.g*., through a protective conduit. The lines **106, 108** are electrically configured with the measurement and test system **200,** *e.g.*, via the connection assembly **500,** such that the system **200** may make various types of potential measurements between the test probe assembly **100** line(s) **106** and/or the structure **12** line **108.** It is understood that the electrical lines **106, 108** may each include one or more electrical lines (*e.g*., one or more wires within a protective conduit) as required depending on the types of measurements being made.

In some embodiments, the measurement and test system **200** may include equipment such as digital multimeters, voltmeters, and/or other types of instrumentation that may read direct current (DC) and the resulting voltages, alternating current (AC) and the resulting voltages, resistance, and other parameters.

For the purposes of his specification, the system **10** will be described with use with a single structure **12.** However, it is understood that more than one structure **12** may be included, and if more than one structure **12** is being protected, each structure **12** may include its own separate wire **108.** It may be preferable that the wires **108** be color coded but this may not be required.

**FIG. 2** shows the system **10** configured to perform potential measurements between a reference electrode **102** and the structure **12** (*e.g*., using the first test methodology described above). In this scenario, the system **10** includes a test probe assembly **100** that includes a reference electrode **102** buried in close proximity to the structure **12** and electrically connected to the measurement and test system **200** via the line **106.** The structure **12** is electrically connected to the test and measurement system **200** via the line **108.** The measurement and test system **200** is then configured and used to perform potential measurements between the reference electrode **102** and the structure **12** (*e.g*., between the lines **106** and **108**) to determine the adequacy of the CP provided.

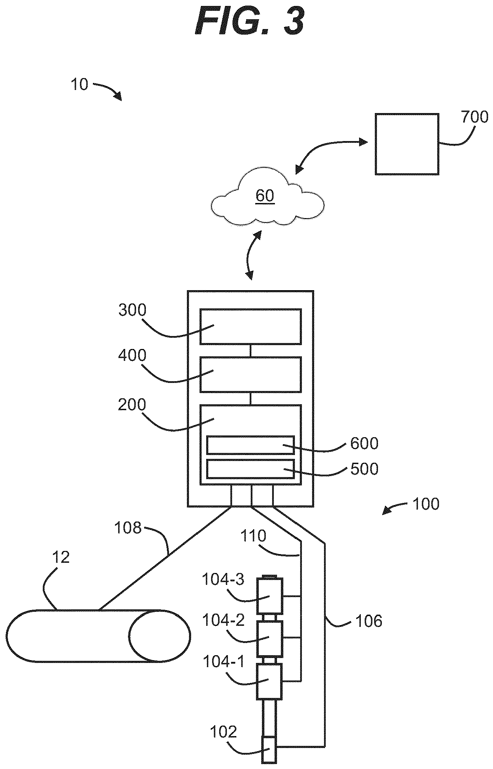

**FIG. 3** shows the system **10** configured to perform potential measurements between a reference electrode **102** and one or more test coupons **104** (*e.g*., using the second test methodology described above). In this scenario, the system **10** includes a test probe assembly **100** that includes a reference electrode **102** and one or more test coupons **104-1, 104-2, 104-3,** ... **104-n** (individually and collectively **104**), all buried in close proximity to the structure **12.** The reference electrode **102** is electrically connected to the measurement and test system **200** via the electrical line **106,** and each of the test coupons **104** are electrically connected to the measurement and test system **200** via one or more distinct electrical lines **110.** While only a single line **110** is shown connecting the test coupons **104** to the measurement and test system **200,** it is understood that each test coupon **104** may include its own distinct electrical line **110** that electrically connects it to the system **200.** The measurement and test system **200** is then configured and used to perform potential measurements between the reference electrode **102** and one or more test coupons **104** (*e.g*., between the reference electrode's line **106** and each of the test coupons' distinct lines **110**) to determine the adequacy of the CP provided.

It may be preferable hat the test coupons **104** (*e.g*., test coupon **104-1** and/or test coupon **104-3**) be electrically connected to the structure **12** such that the coupons **104-1, 104-3** may be at the same potential as the structure **12.** This may be accomplished directly and/or within the connection assembly **500.** In this way, the coupons **104-1, 104-3** may receive the same amount of cathodic protection as the structure **12,** and the measurement of the potential across the coupons **104-1, 104-3** and the reference electrode **102** may represent a measurement between an uncoated area of surface of the structure **12** and the reference electrode **102.**

While the reference electrode **102** is shown as being configured directly on the same physical probe as the test coupons **104,** it is understood that the reference electrode **106** also may be included in a separate probe than the coupons **104.**

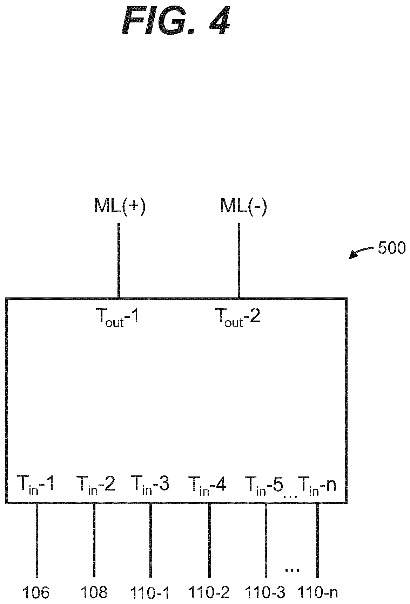

In some embodiments, as shown in **FIG. 4****,** the system **10** includes a connection assembly **500.** In some embodiments, the connection assembly **500** provides an interface between the lines **106, 108, 110** extending from the reference electrode **102,** the structure **12,** and the test coupons **104,** respectively, and the measurement and test system **200.**

In some embodiments, the connection assembly **500** includes a series of input terminals **Tᵢₙ-n,** a series of output terminals **Tₒᵤₜ-n**, and controllable relays, switches and/or other signal directing devices configured between the input terminals **Tᵢₙ-n** and the output terminals **Tₒᵤₜ-n**. In this way, the connection assembly **500** may be controlled (*e.g*., by the controller **400**) to electrically direct signals from any particular input terminal(s) **Tᵢₙ-n** to any particular output terminal(s) **Tₒᵤₜ-n** for measurement.

In some embodiments, the electrical line **106** extending from the reference electrode **102** is electrically connected to a first input terminal **Tᵢₙ-1**, the electrical line **108** from the structure **12** is electrically connected to a second input terminal **Tᵢₙ-2**, the electrical line **110-1** from the first test coupon **104-1** is electrically connected to a third input terminal **Tᵢₙ-3,** the electrical line **110-2** from the second test coupon **104-2** is electrically connected to a fourth input terminal **Tᵢₙ-4**, and the electrical line **110-3** from the third test coupon **104-3** is electrically connected to a fifth input terminal **Tᵢₙ-5**. Additional electrical lines **110-n** may be electrically connected to additional input terminals **Tᵢₙ-n.**

In addition, the output terminals **Tₒᵤₜ-1** and **Tₒᵤₜ-2** may be electrically configured with the positive measurement lead **ML(+)** and the negative measurement lead **ML(-),** respectively, of the voltage and/or current measuring device **106.**

The connection assembly **500** may then be controlled, *e.g*., by the controller **300,** to connect particular input terminals **Tᵢₙ-n** connected to particular electrical lines **106, 108, 110** to particular output terminals **Tₒᵤₜ-n** and measurements may be made using the measurement and test system **200** across the output terminals **Tₒᵤₜ-n** (across the positive measurement lead **ML(+)** and the negative measurement lead **ML(-)**).

For example, to easure the potential between the reference electrode **102** and the structure **12,** the first input terminal **Tᵢₙ-1** may be electrically connected to a first output terminal **Tₒᵤₜ-1** and the second input terminal **Tᵢₙ-2** may be electrically connected to a second output terminal **Tₒᵤₜ-2,** and the measurement and test system **200** may be triggered (*e.g*., via the controller **400**) to measure the potential between the first and second output terminals **Tₒᵤₜ-1, Tₒᵤₜ-2.**

In another example, to measure the potential between the reference electrode **102** and a test coupon **104,** the first input terminal **Tᵢₙ-1** may be electrically connected to a first output terminal **Tₒᵤₜ-1** and one of the third, fourth, or fifth input terminal **Tᵢₙ-3, Tᵢₙ-4, Tᵢₙ-5** (depending on which test coupon **104** is being measured) may be electrically connected to a second output terminal **Tₒᵤₜ-2.** The measurement and test system **200** may then be triggered (*e.g*., via the controller 400) to measure the potential between the first and second output terminals **Tₒᵤₜ-1, Tₒᵤₜ-2.**

It is understood that the examples and arrangements described above are meant for demonstration and that any appropriate electrical line(s) may be connected to any appropriate input terminals **Tᵢₙ-n** and/or any appropriate output terminals **Tₒᵤₜ**-**n** and as necessary and that other types of measurements may be made across the output terminals **Tₒᵤₜ-n.**

In some embodiments, as shown in **FIGS. 1-3****,** the communication system **300** may communicate with other systems, *e.g*., the backend platform **700,** using any type(s) and/or any combinations of types of communications systems **60** and protocols as required. For example, the communication system **300** may transmit and receive data over the Internet via mobile Internet access (also referred to as mobile broadband that may utilize cellular networks) and/or via satellite Internet access that may provide Internet access through communication satellites. The communication system **300** also may transmit and receive the data over other types of network architectures (*e.g*., WAN, wireless WAN, WWAN, and other types of networks), other types of communication systems and any combination thereof. In other embodiments, the communication system **300** may transmit and receive data via mobile communications technologies including cellular networks (such as GSM, CDMA, TDMA, etc.) that may be terrestrial based (may utilize cell towers to receive, relay and transmit the data) and/or satellite communications systems. In other embodiments, the communication system 300 also may transmit and receive data satellite communications systems (which may utilize TDMA as a channel access method for example). The satellite communication systems may provide direct access to orbiting satellites (*e.g*., geostationary satellites) instead of terrestrial cell sites, thus providing clear and unobstructed lines of site between the communication system **300** and the satellite(s) and thereby providing more reliable connectivity. This may overcome the limitations of cellular networks that may or may not provide adequate connectivity and/or coverage depending on the geographical location of the system **10** and of the cell towers.

### Reference Electrode Verification System 600

In some embodiments, the system **10** includes a reference electrode verification system **600** to verify the operational condition of the reference electrode **102.** In some embodiments, the reference electrode verification system **600** may include a standalone assembly while in other embodiments, the reference electrode verification system **600** is integrated into the connection assembly **500** and/or into the measurement and test system **200** and/or into any other elements of the system **10.**

During use of the P measurement system **10,** when voltage potential measurement results taken by the measurement and test system **200** appear to be lower or higher than expected, the reason(s) for the unexpected results may be difficult to immediately identify. In some cases, the reference electrode **102,** having a finite life expectancy, may have itself degraded thereby causing the poor measurement results. In this case, the reference electrode **102** may require maintenance and/or replacement.

However, in other cases, the questionable results may be caused by changes in the electrode's immediate environment (*e.g*., changes in the electrolytes/soil surrounding the electrode **102** due to rain erosion, poor packing of the electrode **102** in the soil, etc.), and the electrode **102** itself may be healthy. For example, the soil surrounding the electrode **102** may have become excessively dry resulting in a high contact resistance between the electrode **102** and the surrounding soil/electrolyte.

Accordingly, without further information, it may be difficult to ascertain the exact cause of the questionable readings.

Furthermore, voltage and/or current measuring devices (*e.g*., digital voltmeters, digital multimeters, etc.) oftentimes include a high input impedance (*e.g*., typically 10MΩ or 100MΩ). This load is imposed in parallel with the circuit being measured. Given this, voltage and/or current measuring devices are able to measure voltage drops across lower resistances quite accurately, however, when measuring voltage drops across higher resistances (*e.g*., across resistances that approach the input resistance of the measurement device), the resulting measurements may be inaccurate.

For example, if the voltage drop being measured is across a soil resistance of about 10KΩ, the resistance of the measuring device (*e.g*., 10MΩ) compared to the resistance of the circuit is 10,000,000 divided by 10,000, or a ratio of 1000:1. Accordingly, if the voltage drop being measured is about 1.0v, the measurement may incur an error of about 0.1 %, or a 0.999 voltage potential. However, if the resistance of the circuit is much higher, *e.g*., 10MΩ due to poor soil conditions surrounding the reference electrode **102,** the resistance of the measuring device compared to the resistance of the circuit may be about 1:1, resulting in an error of 50% with a measurement of 0.5v (using the 1.0v example from above). This phenomenon may be referred to as meter loading.

One procedure that may be implemented in such a scenario is to add water to the soil in the area surrounding the reference electrode **102** to improve the contact resistance between the electrode **102** and the surrounding soil. When this is done, the resulting potential measurements may return to expected values and the reference electrode **102** may be deemed healthy. If, however, the resulting potential measurements do not return to expected values with the improvement of the contact resistance between the electrode **102** and the soil, then it may be ascertained that a problem may exist with the electrode **102** itself.

However, and notably, the above-described procedure requires a person to be physically at the CP test site to add the water to the soil and to assess the situation. Accordingly, if a person is not at the CP test site, *e.g*., the CP test system **10** is being controlled remotely, this troubleshooting procedure may not be available.

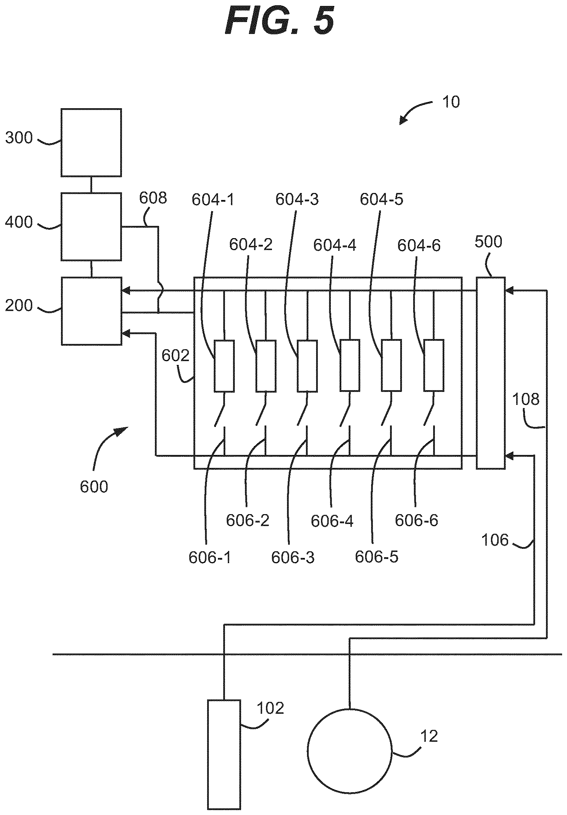

To solve this problem, in some embodiments, as shown in **FIG. 5****,** the reference electrode verification system **600** includes a variable input impedance module **602** that may be used to controllably alter the input impedance implemented by the measurement and test system **200** in order to troubleshoot questionable voltage drop readings. For example, in some embodiments, as shown in **FIG. 5****,** the variable input impedance module **602** includes one or more impedance members **604** (*e.g*., resistors) that may be placed in parallel (*e.g*., one at a time and/or in any combinations) with the native input impedance of the measurement and test system **200** in order to alter the overall input impedance looking into the test system **200.** In another example, the variable impedance module **602** includes a potentiometer in parallel to the native input impedance of the measurement and test system **200** that is controlled (*e.g*., by digital commands) to change in impedance. By controllably changing the impedance of the potentiometer, the overall input impedance looking into the test system **200** also is controllably altered. It is appreciated that other types of controllably adjustable impedance devices also may be used.

In any event, the variable input impedance module **602** may be used to controllably change the measurement and test system's **200**'s input impedance from its native value to one or more known altered value(s) (typically lower). Once altered, the potential measurement under question may be re-measured (using the newly altered input impedance) and the measurement results may be compared to the original results under question. In theory, a healthy reference electrode **102** should maintain a near constant voltage potential reading as the measurement and test system's **200**'s input impedance is systematically lowered.

Accordingly, if the newly measured potential generally matches the original results (*e.g*., within 30mV), the reference electrode **102** and its installation (*i.e*., the reference electrode **102** and its earth environment) may be deemed as healthy and the problem may be due to other factors. However, if the newly measured potential varies from the original results (*e.g*., by more than 30mV), then the reference electrode **102** and/or its installation may be the cause of the problems and may require maintenance and/or replacement.

For example, in some embodiments, as shown in **FIG. 5****,** the variable input impedance module **602** includes a first impedance member **604-1** of 20 MΩ, a second impedance member **604-2** of 10 MΩ, a third impedance member **604-3** of 5 MΩ, a fourth impedance member **604-4** of 1 MΩ, a fifth impedance member **604-5** of 500 kΩ, and a sixth impedance member **604-6** of 100 KΩ. It is understood that the variable input impedance module **602** may include any number of impedance members **604** of any impedance values, and that the above example is shown for demonstration.

In addition, in some embodiments, as shown in **FIG. 5****,** the variable input impedance module **602** includes a plurality of controllable relay switches **606** (and/or other suitable switching devices) with each controllable relay switch **606** configured with a respective impedance member **604.** In this way, the relay switch(es) **606** may be activated to place the respective impedance member(s) **604** in parallel with the measurement and test system's **200**'s input impedance, thereby altering the input impedance as desired. Notably, any number of the impedance members **604** may preferably be implemented individually and/or in any combination with any other impedance members **604** to controllably change the test system's input impedance by any desired value(s).

In some embodiments, the system **10** (*e.g*., the controller **400,** the reference electrode verification system **600** and/or the measurement and test system **200** implements a timing parameter that causes the measurement and test system **200** to wait a desired amount of time (*e.g*., 1 millisecond to about **500** milliseconds) after implementing a new impedance and before taking a measurement reading. This may account for any necessary settling.

In some embodiments, as shown in **FIG. 5****,** the variable input impedance module **602** is in electrical communication (*e.g*., via a control line **608**) with other elements of the system **10,** *e.g*., with the measurement and test system **200,** the communication system **300,** the controller **400,** the connection assembly **500,** and/or the backend platform **700** (*e.g*., via the communication system **300**). In this way, the system **10,** including the reference electrode verification system **600** and its variable input impedance module **602,** may be controlled remotely via the communication system **300** and/or the backend platform **700** in communication with the controller **400.**

In some embodiments, the system **10** is controlled remotely (*i.e*., no person is physically at the CP test site) via the communication system **300** and/or the backend platform **700.** In some embodiments, the system **10** is controlled remotely to connect particular input terminals **Tᵢₙ-n** connected to particular electrical lines **106, 108, 110** to particular output terminals **Tₒᵤₜ-n.** The system **10** may then be controlled remotely to take measurements using the measurement and test system **200** across the output terminals **Tₒᵤₜ-n** (across the positive measurement lead **ML(+)** and the negative measurement lead **ML(-)**). In some embodiments, the system **10** is controlled remotely also to alter the measurement and test system's **200**'s input impedance by positioning one or more impedance members **604** in parallel with the system's **200**'s native input impedance.

During a CP measurement process, the system **10** (*e.g*., the controller **400**) may be programmed to compare measurement readings to historical data and/or predetermined thresholds, and to flag readings that may be out of limits. For example, if a particular voltage potential reading is less than expected (*e.g*., less than historical measurements of the same or similar arrangement) by a particular threshold (*e.g*., as described in the example above), the system **10** may identify the reading as questionable. When a reading is flagged, the system 10 may cease taking CP measurements and notify a user of the system 10 of the out of bounds measurement(s) (*e.g*., using the system's communication system **300** and/or backend platform **700** (*e.g*., using a mobile application)). This process may then trigger the system **10** to utilize the reference electrode verification system **600** and its variable input impedance module **602** to determine if the reference electrode **102** is operating within its specifications or if there may be a problem with the electrode **102.**

In one example, upon detecting a questionable reading, the system **10** may enter into a troubleshooting process by controlling the variable input impedance module **602** to place the first impedance member **604-1** (20 MΩ) in parallel with the measurement and test system's **200**'s input impedance thereby decreasing its overall input impedance. Next, the system **10** may control the measurement and test system **200** to make a measurement, and the system **10** may subsequently compare the newly made measurement with the original measurement results. If the newly made measurement tracks the original measurement (within a predetermined threshold), the system **10** may test the reference electrode **102** further by controlling the variable input impedance module **602** to place the second impedance member **604-2** (10 MΩ) in parallel with the measurement and test system's input impedance thereby further decreasing the overall input impedance. A second measurement may then be made and compared to the original measurement. This process may continue with the system **10** controlling the variable input impedance module **602** to sequentially place the third impedance member **604-3** (5 MΩ), the fourth impedance member **604-4** (1 MΩ), the fifth impedance member **604-5** (500 kΩ), the sixth impedance member **604-6** (100 KΩ), and/or any combinations thereof, while taking respective measurement readings and comparing the readings to the original measurement results. It also is understood that any combinations of the impedance members **604** may be implemented simultaneously at any time to implement other values of parallel impedances.

In some embodiments, the system **10** may utilize the measurement data resulting from the above measurements to determine the relative health of the reference electrode **102.** As described above, if the measurements taken at different input impedances track the original measurements (within a predetermined threshold), the reference electrode **102** may be deemed healthy and the lower-than-expected voltage readings of the original measurement may be attributed to other causes (*e.g*., a high contact resistance between the electrode **102** and the soil). If, however, the measurements taken at different input impedances do not track the original measurements (within a predetermined threshold), the reference electrode **102** may be deemed unhealthy and may be serviced and/or replaced.

In addition, in some embodiments, the system **10** may utilize the measurement results described above to determine the serviceability of the reference electrode **102** under test. For example, the system **10** may determine the amount of deviation between each measurement made using an altered input impedance with the corresponding original measurements made to determine how far out of limits the reference electrode **102** may be. For instance, if the deviation between the new measurement is within 1% of the original measurement, the reference electrode **102** may be deemed as healthy, and if the deviation is less than 5%, the reference electrode **102** may be deemed degraded but potentially serviceable. However, if the deviation is greater than 5%, the reference electrode **102** may be deemed compromised and possibly serviceable (and possibly not serviceable), and if the deviation is greater than 10% then the reference electrode **102** may be deemed unreliable and not serviceable. It is understood that these thresholds are meant for demonstration and that the system **10** may use any suitable thresholds to make these types of determinations.

Given all of the above, the system **10** may be controlled remotely to automatically take CP measurements, to compare the measurements to historical data of the same or similar arrangements, and to flag measurements that appear to differ from the historical data by a predetermined threshold. If no measurements are flagged, the system **10** may continue its CP testing processes without interruption. However, if and when a measurement is flagged, the system **10** may cease the CP testing process and utilize its reference electrode verification system **600** and its variable input impedance module **602** to test the health of the reference electrode **102.**

In some embodiments, the system **10** is programmed to perform all or at least some of the actions described herein automatically and/or on a timed schedule. In other embodiments, a user of the system **10** may remotely trigger the system **10** (*e.g*., using a mobile application in communication with the communication system **300** and/or backend platform **700**) to perform the actions. In some embodiments, the system **10** and/or multiple systems **10** over a large area are controlled to each perform all or some of the actions described herein in a synchronized fashion using a timing signal provided by the Global Positioning System (GPS) or similar system.

In some embodiments, upon performing any of the above, the system **10** may communicate the findings to a user of the system **10** using the system's communication system **300** and/or backend platform **700** (*e.g*., using a mobile application). The user may then utilize the information to assess the situation and to take actions, *e.g*., to send a technician to the CP test site to replace a faulty reference electrode **102,** to add water to the soil in the area surrounding the reference electrode **102,** etc.

### Computing

The functionalities, applications, services, mechanisms, operations, and acts shown and described above are implemented, at least in part, by software running on one or more computers (*e.g*., the controller assembly **400** and the backend systems **600**).

Programs that implement such methods (as well as other types of data) may be stored and transmitted using a variety of media (*e.g*., computer readable media) in a number of manners. Hard-wired circuitry or custom hardware may be used in place of, or in combination with, some or all of the software instructions that can implement the processes of various embodiments. Thus, various combinations of hardware and software may be used instead of software only.

One of ordinary skill in the art will readily appreciate and understand, upon reading this description, that the various processes described herein may be implemented by, *e.g*., appropriately programmed computers, special purpose computers and computing devices. One or more such computers or computing devices may be referred to as a computer system.

As discussed herein, embodiments of the present invention include various steps or operations. A variety of these steps may be performed by hardware components or may be embodied in machine-executable instructions, which may be used to cause a general-purpose or special-purpose processor programmed with the instructions to perform the operations. Alternatively, the steps may be performed by a combination of hardware, software, and/or firmware. The term "module" refers to a self-contained functional component, which can include hardware, software, firmware or any combination thereof.

One of ordinary skill in the art will readily appreciate and understand, upon reading this description, that embodiments of an apparatus may include a computer/computing device operable to perform some (but not necessarily all) of the described process.

Embodiments of a computer-readable medium storing a program or data structure include a computer-readable medium storing a program that, when executed, can cause a processor to perform some (but not necessarily all) of the described process.

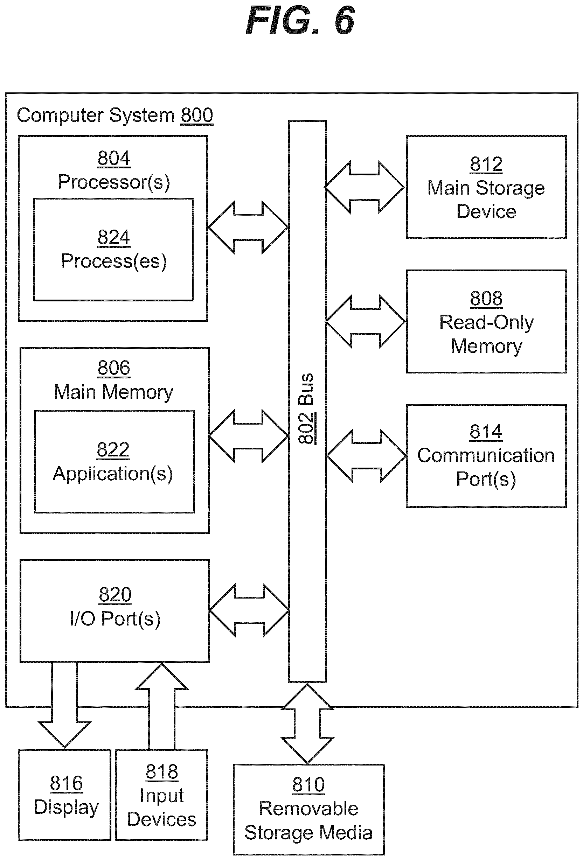

**FIG. 6** is a schematic diagram of a computer system **800** upon which embodiments of the present disclosure may be implemented and carried out.

According to the present example, the computer system **800** includes a bus **802** (i.e., interconnect), one or more processors **804,** a main memory **806,** read-only memory **808,** removable storage media **810,** mass storage **812,** and one or more communications ports **814.** Communication port(s) **814** may be connected to one or more networks (not shown) by way of which the computer system **800** may receive and/or transmit data.

As used herein, a "processor" means one or more microprocessors, central processing units (CPUs), computing devices, microcontrollers, digital signal processors, or like devices or any combination thereof, regardless of their architecture. An apparatus that performs a process can include, *e.g*., a processor and those devices such as input devices and output devices that are appropriate to perform the process.

Processor(s) **804** can be any known processor, such as, but not limited to, an Intel^{®} Itanium^{®} or Itanium 2^{®} processor(s), AMD^{®} Opteron^{®} or Athlon MP^{®} processor(s), or Motorola^{®} lines of processors, and the like. Communications port(s) **814** can be any of an Ethernet port, a Gigabit port using copper or fiber, or a USB port, and the like. Communications port(s) **814** may be chosen depending on a network such as a Local Area Network (LAN), a Wide Area Network (WAN), or any network to which the computer system **800** connects. The computer system **900** may be in communication with peripheral devices (*e.g*., display screen **816,** input device(s) **818**) via Input / Output (I/O) port **820.**

Main memory **806** can be Random Access Memory (RAM), or any other dynamic storage device(s) commonly known in the art. Read-only memory (ROM) **808** can be any static storage device(s) such as Programmable Read-Only Memory (PROM) chips for storing static information such as instructions for processor(s) **804.** Mass storage **812** can be used to store information and instructions. For example, hard disk drives, an optical disc, an array of disks such as Redundant Array of Independent Disks (RAID), or any other mass storage devices may be used.

Bus **802** communicatively couples processor(s) **804** with the other memory, storage and communications blocks. Bus **802** can be a PCI / PCI-X, SCSI, a Universal Serial Bus (USB) based system bus (or other) depending on the storage devices used, and the like. Removable storage media **810** can be any kind of external storage, including hard-drives, floppy drives, USB drives, Compact Disc - Read Only Memory (CD-ROM), Compact Disc - Re-Writable (CD-RW), Digital Versatile Disk - Read Only Memory (DVD-ROM), etc.

Embodiments herein may be provided as one or more computer program products, which may include a machine-readable medium having stored thereon instructions, which may be used to program a computer (or other electronic devices) to perform a process. As used herein, the term "machine-readable medium" refers to any medium, a plurality of the same, or a combination of different media, which participate in providing data (*e.g*., instructions, data structures) which may be read by a computer, a processor or a like device. Such a medium may take many forms, including but not limited to, non-volatile media, volatile media, and transmission media. Non-volatile media include, for example, optical or magnetic disks and other persistent memory. Volatile media include dynamic random access memory, which typically constitutes the main memory of the computer. Transmission media include coaxial cables, copper wire and fiber optics, including the wires that comprise a system bus coupled to the processor. Transmission media may include or convey acoustic waves, light waves and electromagnetic emissions, such as those generated during radio frequency (RF) and infrared (IR) data communications.

The machine-readable medium may include, but is not limited to, floppy diskettes, optical discs, CD-ROMs, magneto-optical disks, ROMs, RAMs, erasable programmable read-only memories (EPROMs), electrically erasable programmable read-only memories (EEPROMs), magnetic or optical cards, flash memory, or other type of media/machine-readable medium suitable for storing electronic instructions. Moreover, embodiments herein may also be downloaded as a computer program product, wherein the program may be transferred from a remote computer to a requesting computer by way of data signals embodied in a carrier wave or other propagation medium via a communication link (*e.g*., modem or network connection).

Various forms of computer readable media may be involved in carrying data (*e.g*. sequences of instructions) to a processor. For example, data may be (i) delivered from RAM to a processor; (ii) carried over a wireless transmission medium; (iii) formatted and/or transmitted according to numerous formats, standards or protocols; and/or (iv) encrypted in any of a variety of ways well known in the art.

A computer-readable medium can store (in any appropriate format) those program elements which are appropriate to perform the methods.

As shown, main memory **806** is encoded with application(s) **822** that support(s) the functionality as discussed herein (the application(s) **822** may be an application(s) that provides some or all of the functionality of the services / mechanisms described herein. Application(s) **822** (and/or other resources as described herein) can be embodied as software code such as data and/or logic instructions (*e.g*., code stored in the memory or on another computer readable medium such as a disk) that supports processing functionality according to different embodiments described herein.

During operation of one embodiment, processor(s) **804** accesses main memory **806** via the use of bus **802** in order to launch, run, execute, interpret or otherwise perform the logic instructions of the application(s) **822.** Execution of application(s) **822** produces processing functionality of the service related to the application(s). In other words, the process(es) **824** represent one or more portions of the application(s) **822** performing within or upon the processor(s) **804** in the computer system **800.**

It should be noted that, in addition to the process(es) **824** that carries (carry) out operations as discussed herein, other embodiments herein include the application **822** itself (i.e., the un-executed or non-performing logic instructions and/or data). The application **822** may be stored on a computer readable medium (*e.g*., a repository) such as a disk or in an optical medium. According to other embodiments, the application **822** can also be stored in a memory type system such as in firmware, read only memory (ROM), or, as in this example, as executable code within the main memory **806** (*e.g*., within Random Access Memory or RAM). For example, application(s) **822** may also be stored in removable storage media **810,** read-only memory **808,** and/or mass storage device **812.**

Those of ordinary skill in the art will understand that the computer system **900** can include other processes and/or software and hardware components, such as an operating system that controls allocation and use of hardware resources.

It is understood that any aspect or element of any embodiment of the system **10** described herein may be combined with any other aspect or element of any other embodiment of the system **10** described herein to form additional embodiments of the system **10,** all of which are within the scope of the system **10.**

Where a process is described herein, those of ordinary skill in the art will appreciate that the process may operate without any user intervention. In another embodiment, the process includes some human intervention (*e.g*., a step is performed by or with the assistance of a human).

As used herein, including in the claims, the phrase "at least some" means "one or more," and includes the case of only one. Thus, *e.g*., the phrase "at least some ABCs" means "one or more ABCs", and includes the case of only one ABC.

As used herein, including in the claims, term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

As used in this description, the term "portion" means some or all. So, for example, "A portion of X" may include some of "X" or all of "X". In the context of a conversation, the term "portion" means some or all of the conversation.

As used herein, including in the claims, the phrase "using" means "using at least," and is not exclusive. Thus, *e.g*., the phrase "using X" means "using at least X." Unless specifically stated by use of the word "only", the phrase "using X" does not mean "using only X."

As used herein, including in the claims, the phrase "based on" means "based in part on" or "based, at least in part, on," and is not exclusive. Thus, *e.g*., the phrase "based on factor X" means "based in part on factor X" or "based, at least in part, on factor X." Unless specifically stated by use of the word "only", the phrase "based on X" does not mean "based only on X."

In general, as used herein, including in the claims, unless the word "only" is specifically used in a phrase, it should not be read into that phrase.

As used herein, including in the claims, the phrase "distinct" means "at least partially distinct." Unless specifically stated, distinct does not mean fully distinct. Thus, *e.g*., the phrase, "X is distinct from Y" means that "X is at least partially distinct from Y," and does not mean that "X is fully distinct from Y." Thus, as used herein, including in the claims, the phrase "X is distinct from Y" means that X differs from Y in at least some way.

It should be appreciated that the words "first," "second," and so on, in the description and claims, are used to distinguish or identify, and not to show a serial or numerical limitation. Similarly, letter labels (*e.g*., "(A)", "(B)", "(C)", and so on, or "(a)", "(b)", and so on) and/or numbers (*e.g.*, "(i)", "(ii)", and so on) are used to assist in readability and to help distinguish and / or identify, and are not intended to be otherwise limiting or to impose or imply any serial or numerical limitations or orderings. Similarly, words such as "particular," "specific," "certain," and "given," in the description and claims, if used, are to distinguish or identify, and are not intended to be otherwise limiting.

As used herein, including in the claims, the terms "multiple" and "plurality" mean "two or more," and include the case of "two." Thus, *e.g*., the phrase "multiple ABCs," means "two or more ABCs," and includes "two ABCs." Similarly, *e.g*., the phrase "multiple PQRs," means "two or more PQRs," and includes "two PQRs."

The present invention also covers the exact terms, features, values and ranges, etc. in case these terms, features, values and ranges etc. are used in conjunction with terms such as about, around, generally, substantially, essentially, at least etc. (i.e., "about 3" or "approximately 3" shall also cover exactly 3 or "substantially constant" shall also cover exactly constant).

As used herein, including in the claims, singular forms of terms are to be construed as also including the plural form and vice versa, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components unless specifically so stated.

It will be appreciated that variations to the embodiments of the invention can be made while still falling within the scope of the invention. Alternative features serving the same, equivalent, or similar purpose can replace features disclosed in the specification, unless stated otherwise. Thus, unless stated otherwise, each feature disclosed represents one example of a generic series of equivalent or similar features.

The present invention also covers the exact terms, features, values, and ranges, etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant).

Use of exemplary language, such as "for instance", "such as", "for example" ("*e*.*g*.,") and the like, is merely intended to better illustrate the invention and does not indicate a limitation on the scope of the invention unless specifically so claimed.

While the invention has been described in connection with what is presently considered to be the most practical and preferred embodiments, it is to be understood that the invention is not to be limited to the disclosed embodiment, but on the contrary, is intended to cover various modifications and equivalent arrangements included within the spirit and scope of the appended claims.

## Claims

1. A system for measuring voltage potential comprising:
a first electrical test lead in electrical communication with a cathodic protection reference electrode;
a second electrical test lead in electrical communication with a cathodic protection test coupon or with a structure under cathodic protection;
an electrical measurement system including a test port including a test port first input impedance and adapted to measure at least one electrical parameter between the first electrical test lead and the second electrical test lead;
at least one first electrical impedance member configurable with the test port; and
a controller adapted to cause the configuring of the at least one first electrical impedance member with the test port to transform the test port first input impedance to a test port second input impedance.

2. The system of claim 1 further comprising:
a first switching device configured with the at least one first electrical impedance member, the first switching device electrically controlled by the controller to electrically position the at least one first electrical impedance member in parallel with respect to the test port thereby transforming the test port first input impedance to the test port second impedance.

3. The system of claim 2 wherein the at least one first electrical impedance member includes a plurality of at least one first electrical impedance members and the first switching device is configured with the plurality of at least one impedance members to electrically position any combination of the plurality of at least one impedance members in parallel with respect to the test port thereby transforming the test port first input impedance to the test port second impedance.

4. The system of any of the preceding claims, wherein the at least one first electrical impedance member includes at least one parallel resistor.

5. The system of claim 4 wherein the at least one parallel resistor includes a resistance value of at least one of 20 MΩ, 10 MΩ, 5 MΩ, 1 MΩ, 500 KΩ, and 100 KΩ.

6. The system of any of the preceding claims, wherein the first electrical impedance member includes a potentiometer.

7. The system of any of the preceding claims, further comprising:
a communication system that provides remote control of the controller.

8. The system of claim 7 wherein the communication system includes at least one of a cellular communications system, a satellite communications system, an Internet communications system, and a wireless communications system.

9. The system of any of the preceding claims, wherein the at least one electrical parameter is a voltage value.

10. The system of any of the claims 2 to 9, wherein the controller is adapted to cause the configuring of a first at least one first electrical impedance member with the test port to transform the test port first input impedance to a test port second input impedance and to cause the electrical measurement system to measure a first at least one electrical parameter at the test port configured with the first at least one electrical impedance member, and to cause the configuring of a second at least one electrical impedance member with the test port to transform the test port first input impedance to a test port third input impedance and to cause the electrical measurement system to measure a second at least one electrical parameter at the test port configured with the second at least one electrical impedance member.

11. The system of claim 10 wherein the controller is adapted to compare the first at least one electrical parameter with the second at least one electrical parameter to determine a first difference value.

12. The system of claim 11 wherein the controller is adapted to provide the first difference value to a user.

13. The system of claim 12 further comprising:
a communication system that provides remote control of the controller;
wherein the controller is adapted to provide the first difference value to the user using the communication system.

14. The system of any of claims 12 or 13, wherein the controller is adapted to provide at least one CP measurement recommendation based at least in part on the difference value.

15. A method of measuring cathodic protection comprising:
(A) electrically configuring a first electrical test lead with a cathodic protection reference electrode;
(B) electrically configuring a second electrical test lead with a cathodic protection test coupon or with a structure under cathodic protection;
(C) electrically configuring a test port of an electrical measurement system with the first electrical test lead and with the second electrical test lead to measure an electrical parameter, the test port including a first input impedance;
(D) providing a first electrical impedance member configurable with the test port;
(E) controlling, using a controller, the configuring of the first electrical impedance member with the test port to transform the test port first input impedance to a test port second input impedance.

16. The method of claim 15 further comprising:
(C)(1) triggering, using a controller, the electrical measurement system to measure the electrical parameter resulting in a first measurement result;
(C)(2) comparing the first measurement result from (C)(1) to an expected measurement result to determine an out of bounds measurement condition.

17. The method of any of claims 15 or 16 further comprising:
(F) triggering, using a controller, the electrical measurement system to measure the electrical parameter resulting in a second measurement result;
(G) comparing the second measurement result to the first measurement result to determine a first measurement result difference;
(H) comparing the first measurement result difference to a first predetermined threshold.

18. The method of any of the claims 15 to 17 wherein the controlling the configuring of the first electrical impedance member with the test port includes controlling a first switching device to electrically position the first electrical impedance member in parallel with respect to the test port.

19. The method of any of the claims 15 to 18 wherein the first electrical impedance member includes a parallel resistor.

20. The method of any of the claims 15 to 17 wherein the first electrical impedance member includes a potentiometer.
